# FASCICULE DE BREVET EUROPEEN

(11) **EP 1 870 562 B1**
(45) Date de publication et mention de la délivrance du brevet: **12.08.2009**
(21) Numéro de dépôt: 07110726.2
(22) Date de dépôt: 21.06.2007
(51) Int. Cl.: F01D 5/22, F01D 11/00, F01D 9/04

(54) **Secteur de redresseur de compresseur ou secteur de distributeur de turbomachine**
Gleichrichtersegment eines Kompressors oder Verteilersegment einer Strömungsmaschine
Compressor synchronising ring sector or turbomachine nozzle guide vane sector

(30) Priorité: 23.06.2006 FR 0652626
(43) Date de publication de la demande: 26.12.2007
(73) Titulaire: SNECMA, 75015 Paris (FR)
(72) Inventeur: Abgrall, Olivier, 77000 Melun (FR); Dezouche, Laurent Gilles, 91830 Le Coudray Montceau (FR); Garcin, François Maurice, 75019 Paris (FR); Lombard, Jean-Pierre François, 77830 Pamfou (FR)
(74) Mandataire: Poulin, Gérard

(56) Documents cités:
- EP-A- 1 408 199
- EP-A- 1 510 654
- EP-A2- 0 903 467
- FR-A- 1 330 656
- US-A- 4 470 754
- US-A- 5 248 240
- US-B1- 6 343 912
- US-B1- 6 425 738

## Description

### DOMAINE TECHNIQUE

La présente invention concerne un secteur de redresseur de compresseur ou un secteur de distributeur de turbomachine comprenant un secteur d'anneau intérieur, un secteur d'anneau extérieur et une pluralité de pales reliant le secteur d'anneau intérieur au secteur d'anneau extérieur, le secteur d'anneau extérieur ou le secteur d'anneau intérieur comportant des découpes radiales, obliques ou quelconques situées entre deux pales consécutives de manière à le diviser en autant de secteurs élémentaires qu'il y a de pale.

Les turbomachines comportent généralement en série un compresseur à basse pression, un compresseur à haute pression, une chambre de combustion, une turbine haute pression et une turbine à basse pression.

Les compresseurs et les turbines comportent plusieurs rangées d'aubes mobiles circonférentiellement espacées séparées par des rangées d'aubes fixes. Dans les turbomachines modernes, les redresseurs et les distributeurs sont soumis à des sollicitations dynamiques élevées. En effet, l'évolution technologique conduit à une réduction du nombre des étages pour des performances égales ou supérieures ce qui ce traduit par une charge plus élevée pour chaque étage. D'autre part, l'évolution des technologies de production conduit à réduire le nombre de pièces ce qui conduit à la diminution de l'effet amortisseur des liaisons entre les pièces. C'est le cas, notamment, lorsque l'on adopte une technologie de brasage de la cartouche d'abradable qui supprime une source importante de dissipation de l'énergie vibratoire.

On connaît (US 6 343, 912) un ensemble d'aubes de stator comprenant une structure annulaire extérieure, une structure annulaire intérieure et un jeu d'aubes individuelles reliant la structure extérieure et la structure intérieure. Les aubes possèdent des plateformes intérieure et extérieure qui forment respectivement une surface d'écoulement extérieure et une surface d'écoulement intérieure. Un jeu de bandes intérieures et un jeu bandes extérieures ferment les jeux entre les plateformes. Les bandes sont fixées au moyen d'un adhésif approprié tel qu'un joint vulcanisant à température ambiante.

Toutefois, dans cet ensemble, les aubes sont individuelles et non formées d'une seule pièce avec l'anneau intérieur et l'anneau extérieur, ce qui est un inconvénient du point de vue de la fabrication car cela augmente le nombre de pièces à assembler.

EP 0 903 467 décrit un secteur de redresseur de turbomachine comportant une pluralité de pales et ayant des découpes dans un seul des secteurs d'anneau, intérieur ou extérieur, et dans lequel des logements sont prévus sécant aux découpes radiales, des plaquettes amortissantes étant disposées dans lesdits logement.

La présente invention a pour objet un secteur de redresseur et un secteur de distributeur qui remédient à ces inconvénients.

Ces buts sont atteints conformément à l'invention, par le fait que les plaquettes sont constituées d'au moins une couche viscoélastique, chaque couche viscoélastique étant prise entre deux couches métalliques.

Dans une réalisation, les plaquettes amortissantes sont montées libres dans les logements. Dans une autre réalisation, les plaquettes amortissantes sont précontraintes dans les logements.

Avantageusement, les logements sont perpendiculaires aux découpes radiales. Les plaquettes amortissantes peuvent présenter des géométries variées, par exemple en H en X, en épingle, ondulée, en U en Z en S.

D'autres caractéristiques et avantages de l'invention apparaîtront encore à la lecture de la description qui suit d'exemples de réalisation donnés à titre illustratif en référence aux figures annexées. Sur ces figures :
- la figure 1 est une vue en coupe d'un turboréacteur ;
- la figure 2 est une vue générale d'un secteur de redresseur de compresseur conforme à la présente invention ;
- la figure 3 est une vue de détail en perspective du secteur de la figure 2 ;
- la figure 4 est une autre figure de détail en perspective du secteur de la figure 2 montrant le système de rétention axial des plaquettes ;
- la figure 5 est une vue générale d'une variante de réalisation d'un secteur conforme à la présente invention ;
- la figure 6 est une courbe qui illustre la réponse dynamique du système ;
- les figures 7 à 14 sont des figures qui illustrent différentes géométries des plaquettes.

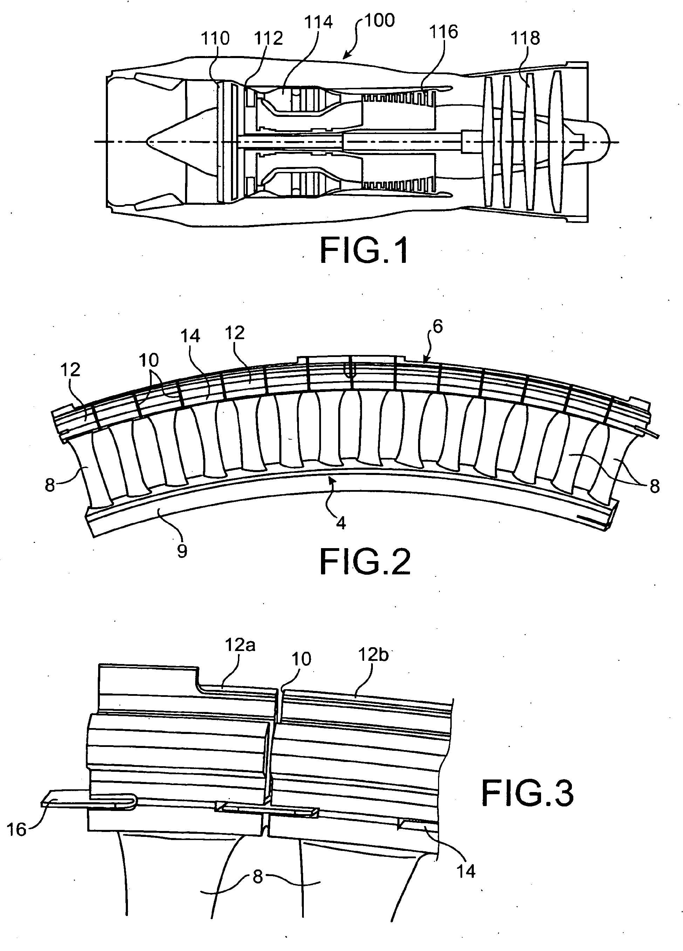

On a représenté sur la figure 1, un turboréacteur d'avion 100 auquel l'invention s'applique. Il comporte, d'amont en aval, un compresseur à basse pression 110, un compresseur à haute pression 112, une chambre annulaire de combustion 114, une turbine à haute pression 116 et une turbine à basse pression 118.

On a représenté sur la figure 2 une vue d'un secteur de redresseur de compresseur. Afin de diminuer le nombre de pièce, ce secteur est coulé d'une seule pièce. Il comporte un secteur d'anneau intérieur 4, un secteur d'anneau extérieur 6 et des pales 8 reliant le secteur d'anneau intérieur 4 au secteur d'anneau extérieur 6. Une couche 9 de matériau abradable, viscoélastique ou abrasif selon le type de redresseur est solidarisée à l'anneau intérieur 4. Le secteur d'anneau intérieur 4 est réalisé d'une seule pièce alors que le secteur d'anneau extérieur 6 comporte des découpes radiales 10 situées entre deux pales consécutives de manière à le diviser en autant de secteurs élémentaires 12 qu'il y a de pales. Les découpes 10 sont usinées par exemple par électroérosion, après la fabrication de la pièce monobloc. Elles forment un interstice d'une largeur d'environ 1mm situé à peu près sur une ligne médiane entre deux pales. Ensuite, un deuxième usinage est effectué par le même procédé, mais dans un sens perpendiculaire aux interstices 10 de manière à réaliser un logement 14 constitué de deux demie partie. Dans l'exemple représenté, le logement 14 est perpendiculaire aux découpes radiales 10. Toutefois, cette caractéristique n'est pas essentielle et les logements pourraient ne pas être perpendiculaires aux découpes radiales 10.

On a représenté sur la figure 3 une vue de détail à plus grande échelle des interstices 10 et des logements 14. Dans chaque logement on introduit une plaquette mince métallique 16. Chaque plaquette 16 a deux surfaces de frottement : une avec le secteur élémentaire 12a, l'autre avec le secteur élémentaire 12b. Ainsi, quand les pales 8 vibrent, les mouvements de chaque secteur induisent un glissement forcé entre eux et la plaquette au niveau des surfaces de frottement. La plaquette par effet de gradient de pression entre la veine aérodynamique et l'extérieur est plaquée sur les surfaces de frottement avec un effort normal résultant de ce gradient de pression.

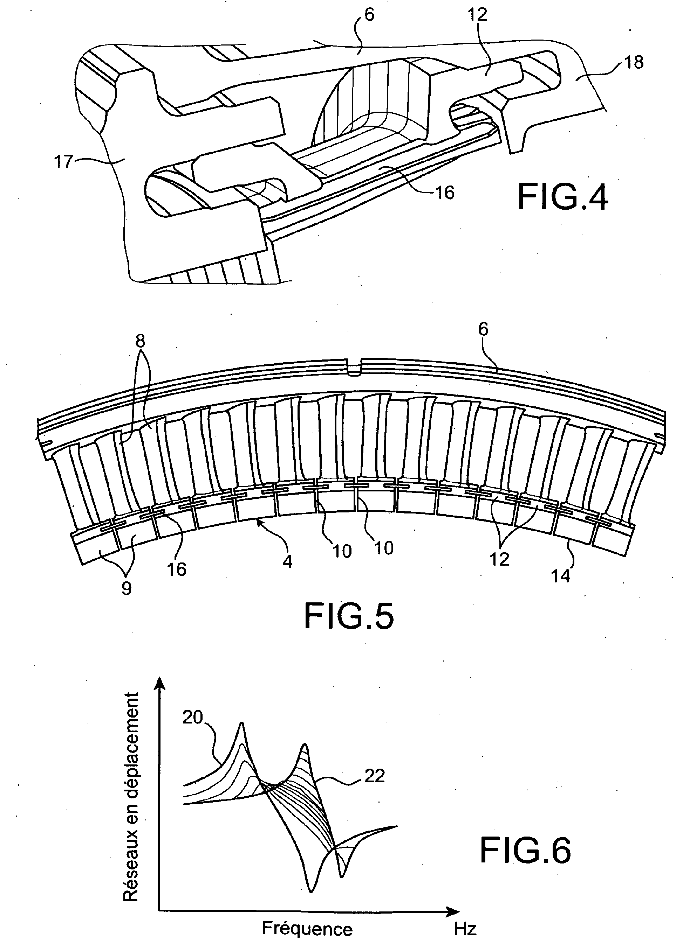

On a représenté sur la figure 4 une vue en perspective de l'anneau extérieur 6 du secteur de la figure 1. Cette vue montre un système de rétention axiale des plaquettes 16. Chaque plaquette 16 est prise entre les sous-parties de carter de turbomachine 17 et 18 de telle sorte qu'elle est immobilisée axialement.

On a représenté sur la figure 5 une vue générale d'une variante de réalisation d'un secteur de redresseur de compresseur conforme à la présente invention. Dans cette variante le secteur d'anneau extérieur 6 est d'une seule pièce tandis que le secteur d'anneau intérieur 4 comporte des découpes radiales 10 situées entre deux pales 8 consécutives de manière à le diviser en autant de secteur élémentaire 12 qu'il y de pales. La couche 9 de matériau abradable, viscoélastique ou abrasif est également découpées en secteurs élémentaires par les découpes radiales 10. Des logements 14 sont prévus sécants aux découpes radiales 10. Des plaquettes amortissantes 16 sont disposées dans les logements 14.

On a représenté sur la figure 6 une courbe qui illustre la réponse dynamique du système. La référence 20 représente la réponse du système sans plaquettes amortissantes tandis que le numéro de référence 22 désigne la réponse du système avec les plaquettes collées. En fonctionnement le système passe par une infinité d'états instables compris entre les courbes 20 et 22 correspondant à des états successifs dans lesquels la plaquette est collée ou dans lesquels elle glisse par rapport à la surface des logements. On obtient ainsi une raideur non linéaire qui dépend de l'amplitude des vibrations. Quand l'amplitude des vibrations augmente, la plaquette se décolle. Quand l'amplitude des vibrations diminue la plaquette est collée à la surface des logements sous l'effet de la différence de pression entre ces deux faces.

Le principe de fonctionnement repose sur l'introduction d'une non linéarité de raideur dans le comportement dynamique de la structure. Cette non linéarité est activée à partir d'un niveau vibratoire seuil de l'ensemble du système. Cette activité vibratoire provoque un mouvement relatif entre les secteurs élémentaires des pales et la plaquette amortissante. Ce mouvement relatif provoque des pertes d'adhérence et des recollements successifs des plaquettes amortissantes. Ils se traduisent par une variation continuelle de la raideur locale du système. De ce fait, le ou les modes responsables de l'activité vibratoire sont désorganisés par la variation permanente de leurs fréquences propres associées. Les résonances du système ne peuvent s'installer du fait de la variation continuelle de l'état du système dynamique. Il s'en suit une réduction très importante des niveaux vibratoires du système.

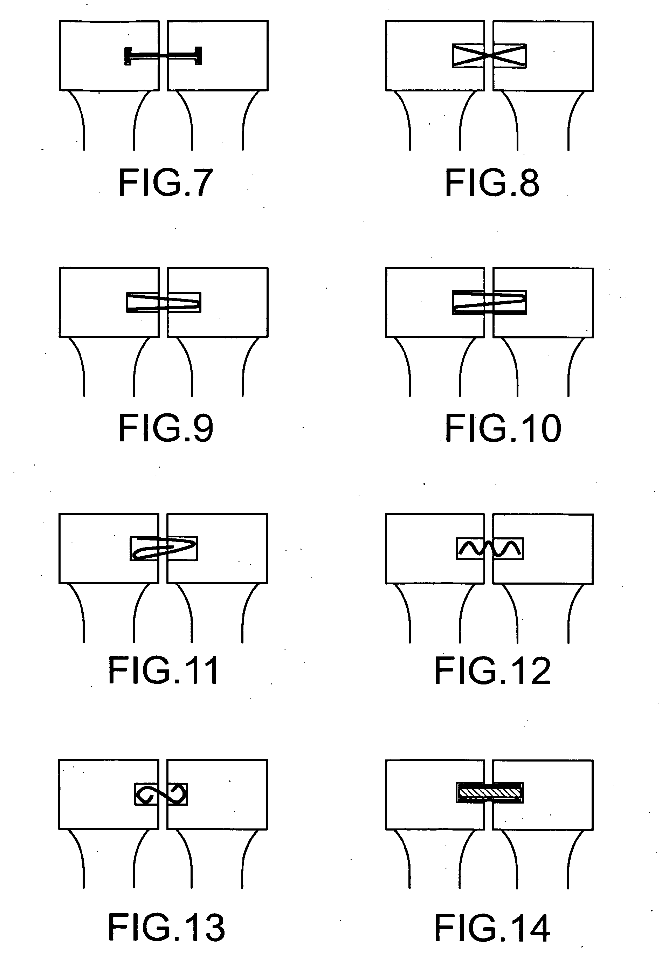

On a représenté sur les figures 7 à 14 diverses variantes de réalisation de la géométrie des plaquettes amortissantes. Sur la figure 7, les plaquettes possèdent une géométrie en H ; sur la figure 8, les plaquettes possèdent une géométrie en X. Sur la figure 9, les plaquettes amortissantes présentent une géométrie en U précontraintes. En d'autres termes les plaquettes 16 présentent une élasticité qui les plaque sur la surface du logement. La figure 10 représente une plaquette amortissante présentant une géométrie en Z précontrainte également et la figure 11 représente une plaquette présentant une géométrie en épingle, précontrainte également. La figure 12 représente une plaquette présentant une géométrie ondulée précontrainte et la figure 13 représente une plaquette présentant une géométrie en S également précontrainte. La figure 14 représente une plaquette sandwich métal-visco élastique métal. Elle est constituée de deux plaques d'un matériau dur 20 entre lesquelles est disposée une couche d'un matériau visco élastique. Bien entendu, au lieu d'avoir une seule couche de matériau élastique, on pourrait en avoir plusieurs, chaque couche de matériau viscoélastique étant elle-même prise entre deux couches de matériau dur. Enfin, il est entendu que les plaquettes amortissantes présentant une géométrie en X, en U, en Z, en épingle, ondulée ou en S peuvent elles-mêmes être constituée d'une ou plusieurs couches de matériau viscoélastique prises entre deux couches de matériau dur.

## Revendications

1. Secteur de redresseur de compresseur ou secteur de distributeur de turbomachine comprenant un secteur d'anneau intérieur (4), un secteur d'anneau extérieur (6) et une pluralité de pales (8) reliant le secteur d'anneau intérieur (4) au secteur d'anneau extérieur (6), le secteur d'anneau extérieur (6) ou le secteur d'anneau intérieur (4) comportant des découpes radiales (10) situées entre deux pales consécutives (8) de manière à le diviser en autant de secteurs élémentaires qu'il y a de pales, des logements (14) étant prévus sécants aux découpes radiales (10), des plaquettes amortissantes (16) étant disposées dans lesdits logements **caractérisé en ce que** les plaquettes sont constituées d'au moins une couche viscoélastique (22), chaque couche viscoélastique étant prise entre deux couches métalliques (20).

2. Secteur selon la revendication 1, **caractérisé en ce que** les plaquettes amortissantes (16) sont montées libres dans lesdits logements (14).

3. Secteur selon la revendication 1, **caractérisé en ce que** les plaquettes amortissantes (16) sont précontraintes dans lesdits logements (14).

4. Secteur selon l'une des revendications 1 à 3, **caractérisé en ce que** les logements (14) sont perpendiculaires aux découpes radiales (10).

5. Secteur selon la revendication 2, **caractérisé en ce que** les plaquettes amortissantes (16) présentent une géométrie en H.

6. Secteur selon la revendication 2, **caractérisé en ce que** les plaquettes (16) présentent une géométrie en X.

7. Secteur selon la revendication 3, **caractérisé en ce que** les plaquettes amortissantes (16) présentent une géométrie en épingle.

8. Secteur selon la revendication 3, **caractérisé en ce que** les plaquettes amortissantes (16) présentent une géométrie ondulée.

9. Secteur selon la revendication 3, **caractérisé en ce que** les plaquettes amortissantes (16) présentent une géométrie en U.

10. Secteur selon la revendication 3, **caractérisé en ce que** les plaquettes amortissantes (16) présentent une géométrie en Z.

11. Secteur selon la revendication 3, **caractérisé en ce que** les plaquettes amortissantes (16) présentent une géométrie en S.

12. Compresseur de turbomachine, **caractérisé en ce qu'**il est équipé d'au moins un secteur selon l'une des revendications 1 à 11.

13. Turbine de turbomachine, **caractérisée en ce qu'**elle est équipée d'au moins un secteur selon l'une des revendications 1 à 11.

14. Turbomachine, **caractérisée en ce qu'**elle comporte un compresseur selon la revendication 12 et/ou une turbine selon la revendication 13.

## Claims

1. A sector of a compressor guide vanes assembly or a sector of a turbomachine nozzle assembly comprising an inner ring sector, an outer ring sector and a multitude of blades connecting the inner ring sector to the outer ring sector, the outer ring sector or the inner ring sector comprising radial cuts situated between two consecutive blades in such a way as to split them into the same number of elementary sectors as there are blades, housings being provided, secant to the radial cuts, damping inserts being positioned in said housings; **characterized in that** the inserts consist of at least one viscoelastic layer, each viscoelastic layer being sandwiched between two metal layers.

2. The sector as claimed in claim 1, wherein the damping inserts are fitted into said housings such that they are free.

3. The sector as claimed in claim 1, wherein the damping inserts are fitted into said housings such that they are preloaded.

4. The sector as claimed in one of claims 1 to 3, wherein the housings are perpendicular to the radial cuts.

5. The sector as claimed in claim 2, wherein the damping inserts have an H-shaped geometry.

6. The sector as claimed in claim 2, wherein the inserts have an X-shaped geometry.

7. The sector as claimed in claim 3, wherein the damping inserts have a hairpin-shaped geometry.

8. The sector as claimed in claim 3, wherein the damping inserts have a wavy geometry.

9. The sector as claimed in claim 3, wherein the damping inserts have a U-shaped geometry.

10. The sector as claimed in claim 3, wherein the damping inserts have a Z-shaped geometry.

11. The sector as claimed in claim 3, wherein the damping inserts have an S-shaped geometry.

12. A turbomachine compressor which is equipped with at least one sector as claimed in one of claims 1 to 11.

13. A turbomachine turbine which is equipped with at least one sector as claimed in one of claims 1 to 11.

14. A turbomachine which comprises a compressor as claimed in claim 12 and/or a turbine as claimed in claim 13.

## Patentansprüche

1. Verdichter-Leitapparatsektor oder Leitschaufelapparatsektor einer Turbomaschine, der einen Innenringsektor (4), einen Außenringsektor (6) und eine Vielzahl von Schaufelblättern (8), die den Innenringsektor (4) mit dem Außenringsektor (6) verbinden, umfasst, wobei der Außenringsektor (6) oder der limenringsektor (4) radiale Ausschnitte (10) aufweisen, die sich zwischen zwei aufeinander folgenden Schaufelblättern (8) befinden, so dass er in ebenso viele Einzelsektoren, wie Schaufelblätter vorhanden sind, unterteilt wird, wobei Aufnahmen (14) vorgesehen sind, die die radialen Ausschnitte (10) schneiden, wobei Dämpfungsplättchen (16) in diesen Aufnahmen angeordnet sind,
**dadurch gekennzeichnet,**
**dass** die Plättchen aus mindestens einer viskoelastischen Schicht (22) bestehen, wobei jede viskoelastische Schicht zwischen zwei Metallschichten (20) eingeschlossen liegt.

2. Sektor nach Anspruch 1,
**dadurch gekennzeichnet,**
**dass** die Dämpfungsplättchen (16) frei in diesen Aufnahmen (14) angebracht sind.

3. Sektor nach Anspruch 1,
**dadurch gekennzeichnet,**
**dass** die Dämpfungsplättchen (16) in diesen Aufnahmen (14) vorgespannt sind.

4. Sektor nach einem der Ansprüche 1 bis 3,
**dadurch gekennzeichnet,**
**dass** die Aufnahmen (14) im rechten Winkel zu den radialen Ausschnitten (10) verlaufen.

5. Sektor nach Anspruch 2,
**dadurch gekennzeichnet,**
**dass** die Dämpfungsplättchen (16) eine H-förmige Geometrie aufweisen.

6. Sektor nach Anspruch 2,
**dadurch gekennzeichnet,**
**dass** die Plättchen (16) eine X-förmige Geometrie aufweisen.

7. Sektor nach Anspruch 3,
**dadurch gekennzeichnet,**
**dass** die Dämpfungsplättchen (16) eine haarnadelförmige Geometrie aufweisen.

8. Sektor nach Anspruch 3,
**dadurch gekennzeichnet,**
**dass** die Dämpfungsplättchen (16) eine wellenförmige Geometrie aufweisen.

9. Sektor nach Anspruch 3,
**dadurch gekennzeichnet,**
**dass** die Dämpfungsplättchen (16) eine U-förmige Geometrie aufweisen.

10. Sektor nach Anspruch 3,
**dadurch gekennzeichnet,**
**dass** die Dämpfungsplättchen (16) eine Z-förmige Geometrie aufweisen.

11. Sektor nach Anspruch 3,
**dadurch gekennzeichnet,**
**dass** die Dämpfungsplättchen (16) eine S-förmige Geometrie aufweisen.

12. Turbomaschinenverdichter,
**dadurch gekennzeichnet,**
**dass** er mit mindestens einem Sektor gemäß einem der Ansprüche 1 bis 11 ausgestattet ist.

13. Turbomaschinenturbine,
**dadurch gekennzeichnet,**
**dass** sie mit mindestens einem Sektor gemäß einem der Ansprüche 1 bis 11 ausgestattet ist.

14. Turbomaschine,
**dadurch gekennzeichnet,**
**dass** sie einen Verdichter gemäß Anspruch 12 und/oder eine Turbine gemäß Anspruch 13 aufweist.
